# EUROPÄISCHE PATENTANMELDUNG

(11) **EP 1 187 501 A2**
(43) Veröffentlichungstag der Anmeldung: **13.03.2002**
(21) Anmeldenummer: 01250303.3
(22) Anmeldetag: 23.08.2001
(51) Int. Cl.: H04Q 7/22

(54) **Verfahren und anordnung zum Übertragen einer schriftlichen Kurzinformation an ein Kommunikationsendgerät**

(30) Priorität: 06.09.2000 DE 10044555
(71) Anmelder: SIEMENS AKTIENGESELLSCHAFT, 80333 München (DE)
(72) Erfinder: Aschir, Alexander, 13851 Berlin (DE)

(57) **Zusammenfassung**

Die Erfindung betrifft ein Verfahren und eine Anordnung zum Übertragen einer schriftlichen Kurzinformation an ein Kommunikationsendgerät (MS-B) eines Kommunikationsnetzes. Um den Anwendungsbereich für schriftliche Kurzinformationen in Kommunikationsnetzen zu vergrößern, wird die schriftliche Kurzinformation mit einer kommunikationsendgerätefreien Kommunikationsadresse adressiert, danach aufgrund der kommunikationsendgerätefreien Kommunikationsadresse der schriftlichen Kurzinformation von einem Adressumwandler (SCP) netzseitig diese Adresse durch eine Kommunikationsadresse des Kommunikationsendgerätes (MS-B) ersetzt und die schriftliche Kurzinformation zu diesem Kommunikationsendgerät (MS-B) übertragen.

## Beschreibung

Die Erfindung betrifft ein Verfahren zum Übertragen einer schriftlichen Kurzinformation an ein Kommunikationsendgerät eines Kommunikationsnetzes. Ein derartiges Verfahren ist aus der Druckschrift "Siemens S25 User Guide" vom September 1999, Nr. A31008-H3100-A1-3-7619 insbesondere aus den Seiten 22 und 23, bekannt. Aus Seite 23 dieser Druckschrift geht hervor, dass der Absender einer schriftlichen Kurzinformation beim Versenden derselben eine Rufnummer eines Funktelefons angibt, zu dem die schriftliche Kurzinformation versandt werden soll. Weiterhin betrifft die Erfindung eine Anordnung zum Übertragen einer schriftlichen Kurzinformation an ein Kommunikationsendgerät.

Der Erfindung liegt die Aufgabe zugrunde, ein Verfahren und eine Anordnung anzugeben, mit dem der Anwendungsbereich für schriftliche Kurzinformationen in Kommunikationsnetzen vergrößert werden kann.

Diese Aufgabe wird bei einem Verfahren der eingangs angegebenen Art erfindungsgemäß dadurch gelöst, dass die schriftliche Kurzinformation an das Kommunikationsendgerät von einem Kurzinformation-Sendegerät mit einer kommunikationsendgerätefreien Kommunikationsadresse adressiert wird, aufgrund der kommunikationsendgerätefreien Kommunikationsadresse der schriftlichen Kurzinformation von einem Adressumwandler netzseitig diese Adresse durch eine Kommunikationsadresse des Kommunikationsendgerätes ersetzt wird und die schriftliche Kurzinformation zu diesem Kommunikationsendgerät übertragen wird. Hierbei ist insbesondere vorteilhaft, dass der Absender der schriftlichen Kurzinformation diese auch mit einer kommunikationsendgerätefreien Kommunikationsadresse adressieren kann. Kommunikationsendgerätefreie Kommunikationsadressen sind solche, denen kein Kommunikationsendgerät fest zugeordnet ist. Diese Adressen werden auch als logische Adressen bezeichnet. Solche logische Adressen treten beispielsweise auf in virtuellen privaten Netzen (VPN - Virtual Private Network), bei personenbezogenen Rufnummern (PNS - Personal Number Service) oder in anderen Kommunikationsdiensten, die beispielsweise durch Intelligente Netze (IN) gesteuert werden. Das erfindungsgemäße Verfahren ermöglicht es, schriftliche Kurzinformationen auch in Diensten oder Anwendungen einzusetzen, in denen kommunikationsendgerätefreie Kommunikationsadressen verwendet werden.

Eine vorteilhafte Ausgestaltungsform des erfindungsgemäßen Verfahrens sieht vor, dass als Adressumwandler ein Netzknoten eines mit dem Kommunikationsnetz verbundenen oder in dem Kommunikationsnetz enthaltenen Intelligenten Netzes (IN) verwendet wird. Da kommunikationsendgerätefreie Kommunikationsadressen oftmals in Diensten auftreten, die mittels eines Intelligenten Netzes durchgeführt werden, ist es vorteilhaft, die Ersetzung der kommunikationsendgerätefreien Kommunikationsadresse der schriftlichen Kurzinformation durch die Kommunikationsadresse des Kommunikationsgerätes von einem Netzknoten des Intelligenten Netzes vornehmen zu lassen.

In einer weiteren vorteilhaften Ausführungsform des erfindungsgemäßen Verfahrens wird als Adressumwandler ein Dienstesteuerpunkt des Intelligenten Netzes verwendet, der signalflussbezogen zwischen einem Kurzinformation-Dienstzentrum und einem Heimatregister des Kommunikationsnetzes angeordnet ist.

Dies ist insbesondere deshalb vorteilhaft, weil die für die Adressersetzung notwendigen Verfahrensschritte im wesentlichen vom Dienstesteuerpunkt ausgeführt werden und keine Änderungen in der Arbeitsweise der heute gebräuchlichen Kurzinformationsdienstzentren und Heimatregister notwendig sind.

Eine vorteilhafte Form des erfindungsgemäßen Verfahrens sieht vor, dass als Dienstesteuerpunkt ein Dienstesteuerpunkt verwendet wird, der von Seiten des Kurzinformation-Dienstzentrums wie das Heimatregister angesprochen wird und von Seiten des Heimatregisters wie das Kurzinformation-Dienstzentrum angesprochen wird.

Die obengenannte Aufgabe wird ebenfalls erfindungsgemäß gelöst von einer Anordnung zur Durchführung des bisher beschriebenen Verfahrens, welche einen einem Kommunikationsnetz zugeordneten Adressumwandler aufweist, der eine kommunikationsendgerätefreie Kommunikationsadresse einer schriftlichen Kurzinformation durch eine Kommunikationsadresse eines Kommunikationsendgerätes ersetzt. Durch Benutzung einer derartigen Anordnung kann die schriftliche Kurzinformation beim Absender mit einer kommunikationsendgerätefreien Kommunikationsadresse adressiert werden; nach Ersetzung dieser kommunikationsendgerätefreien Kommunikationsadresse durch eine Kommunikationsadresse eines Kommunikationsendgerätes kann die schriftliche Kurzinformation zu diesem Kommunikationsendgerät übertragen werden.

Die erfindungsgemäße Anordnung kann auch derart ausgestaltet sein, dass diese als Adressumwandler einen Netzknoten eines mit dem Kommunikationsnetz verbundenen oder in dem Kommunikationsnetz enthaltenen Intelligenten Netzes aufweist. Da kommunikationsendgerätefreie Kommunikationsadressen oftmals in Diensten auftreten, die mittels eines Intelligenten Netzes (IN) durchgeführt werden, ist es vorteilhaft, als Adressumwandler einen Netzknoten eines intelligenten Netzes zu verwenden.

Die erfindungsgemäße Anordnung kann auch derart ausgestaltet sein, dass diese als Adressumwandler einen Dienstesteuerpunkt des Intelligenten Netzes (IN) aufweist, der signalflussbezogen zwischen einem Kurzinformation-Dienstzentrum und einem Heimatregister des Kommunikationsnetzes angeordnet ist. Dies ist insbesondere deshalb vorteilhaft, weil die Adressersetzung so im wesentlichen vom Dienstesteuerpunkt ausgeführt werden kann und keine Änderungen in der Arbeitsweise der heute gebräuchlichen Kurzinformationsdienstzentren und Heimatregister notwendig sind.

Die erfindungsgemäße Anordnung kann auch derart ausgestaltet sein, dass diese als Dienstesteuerpunkt einen Dienstesteuerpunkt aufweist, der von Seiten des Kurzinformation-Dienstzentrums wie das Heimatregister angesprochen wird und von Seiten des Heimatregisters wie das Kurzinformation-Dienstzentrum angesprochen wird.

Zur weiteren Erläuterung der Erfindung ist
in Figur 1 ein Ausführungsbeispiel einer Anordnung zur Durchführung des erfindungsgemäßen Verfahrens,
in Figur 2 ein Ausführungsbeispiel des Nachrichtenflusses beim Übertragen einer schriftlichen Kurzinformation,
in Figur 3 ein Ausführungsbeispiel des Nachrichtenflusses, wenn die schriftliche Kurzinformation nicht an das Kommunikationsendgerät übertragen werden kann und
in Figur 4 ein Ausführungsbeispiel des Nachrichtenflusses zur Benachrichtigung eines Kurzinformation-Dienstzentrums über bestehende Empfangsbereitschaft des Kommunikationsendgeräts für schriftliche Kurzinformationen dargestellt.

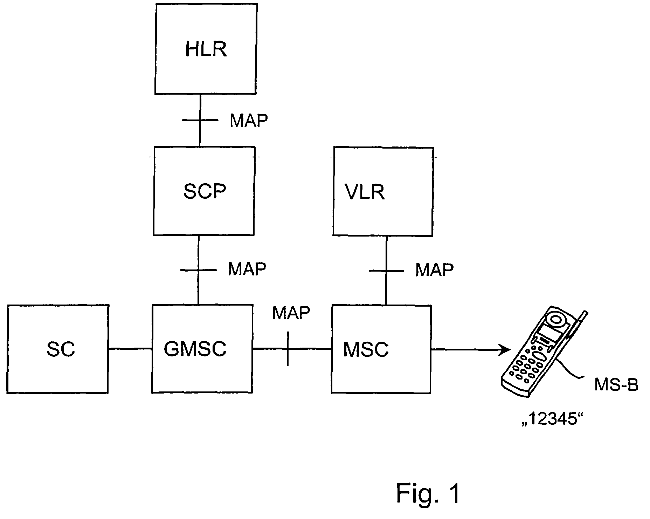

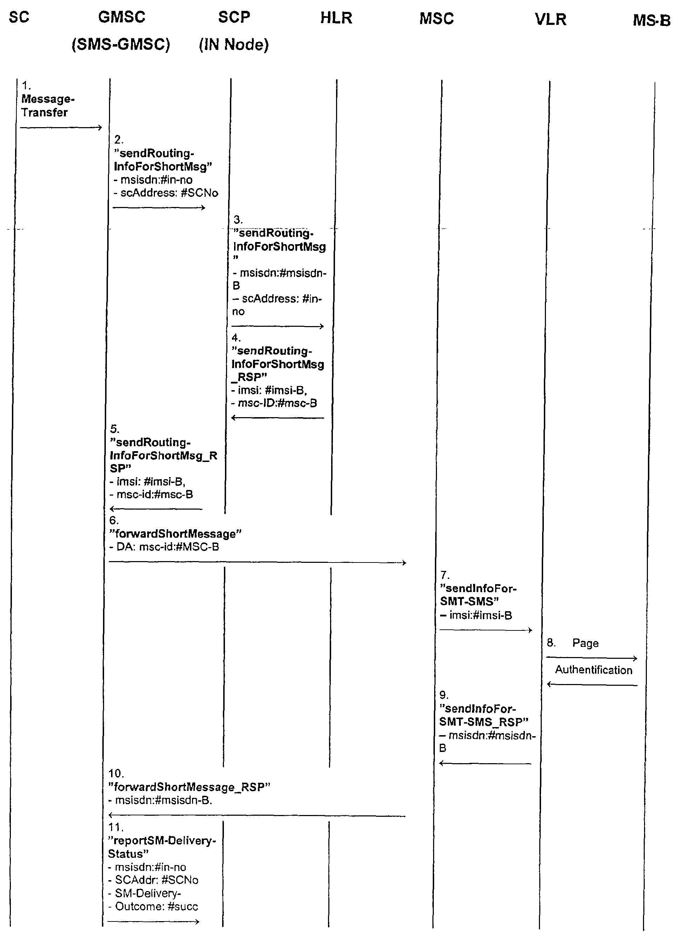

In Figur 1 ist ein Ausschnitt aus einem Kommunikationsnetz dargestellt; anhand dieser Anordnung wird erläutert, wie eine schriftliche Kurzinformation (auch SM = Short Message genannt), die mit einer kommunikationsendgerätefreien Kommunikationsadresse adressiert wird, zu einem Kommunikationsendgerät übertragen wird. Eine kommunikationsendgerätefreie Kommunikationsadresse ist beispielsweise eine sog. "lebenslange Rufnummer" oder "persönliche Rufnummer", die einer Person, nicht aber einem Kommunikationsendgerät fest zugeordnet ist. Andere Beispiele für kommunikationsendgerätefreie Kommunikationsadressen sind gebührenfreie Rufnummern (0800-Rufnummern) oder Rufnummern in virtuellen privaten Netzen (VPN). In diesem Ausführungsbeispiel soll als kommunikationsendgerätefreie Kommunikationsadresse eine Telefon-Rufnummer (beispielsweise eine persönliche Rufnummer) verwendet werden, deren Anwahl eine Diensterbringung durch ein sog. Intelligentes Netz (IN) auslöst; solche Rufnummern werden auch "IN-Service-Nummern" genannt. Zur sprachlichen Vereinfachung wird diese kommunikationsendgerätefreie Kommunikationsadresse im Folgenden auch "IN-Nummer" genannt.

In diesem Ausführungsbeispiel wird das Kommunikationsnetz durch ein Funk-Kommunikationsnetz (wie z.B. ein Mobilfunknetz) gebildet. Die mit der kommunikationsendgerätefreien Kommunikationsadresse ("IN-Nummer") adressierte schriftliche Kurzinformation wird von einem in Fig. 1 nicht dargestellten Kurzinformation-Sendegerät (z.B. von einem Mobil-Kommunikationsendgerät, einem Mobiltelefon) in bekannter Weise zu einem Kurzinformation-Dienstzentrum SC, welches auch als "Short Message Service Center" (SMS-SC) oder "Service Center" bezeichnet wird, übertragen. Das Kurzinformation-Dienstzentrum SC überträgt daraufhin die schriftliche Kurzinformation an eine Mobil-Vermittlungsstelle GMSC (Gateway-Mobile-Switching-Centre). Da die schriftliche Kurzinformation mit der IN-Nummer adressiert ist, sendet die Mobil-Vermittlungsstelle GMSC eine die IN-Nummer enthaltende Nachricht zu einem Dienstesteuerpunkt SCP (Service Control Point) eines Intelligenten Netzes. Voraussetzung ist, dass die Mobil-Vermittlungsstelle GMSC entsprechend konfiguriert ist (z.B. durch Anpassen einer sog. "Routing-Datenbasis"). Mittels dieses Dienstesteuerpunktes SCP wird im Intelligenten Netz ein Dienst ausgeführt und die in der Nachricht enthaltene IN-Nummer, also die kommunikationsendgerätefreie Kommunikationsadresse, durch eine Kommunikationsadresse eines Kommunikationsendgerätes ersetzt; in diesem Beispiel durch eine Rufnummer "12345" eines Kommunikationsendgerätes MS-B (Mobile Station B). Der Dienstesteuerpunkt SCP arbeitet also als ein Adressumwandler. Der Dienstesteuerpunkt SCP sendet daraufhin die veränderte Nachricht weiter an ein Heimatregister HLR (Home Location Register) des Kommunikationsnetzes. Das Heimatregister HLR ermittelt in bekannter Weise die internationale Mobilfunk-Teilnehmerkennung (International Mobile Subscriber Identity IMSI) des Kommunikationsendgerätes MS-B und eine Kennung einer weiteren Mobil-Vermittlungsstelle MSC, in deren Einflussbereich sich das Kommunikationsendgerät MS-B zu dem entsprechenden Zeitpunkt befindet. Die internationale Mobilfunk-Teilnehmerkennung und die Kennung der weiteren Mobil-Vermittlungsstelle werden nun von dem Heimatregister HLR mittels einer Antwort-Nachricht zum Dienstesteuerpunkt SCP und von diesem zur Mobil-Vermittlungsstelle GMSC gesendet.

Daraufhin sendet die Mobil-Vermittlungsstelle GMSC die schriftliche Kurzinformation an die weitere Mobil-Vermittlungsstelle MSC, welche in bekannter Weise unter Benutzung eines Besucherregisters VLR (Visitor Location Register) die schriftliche Kurzinformation zu dem Kommunikationsendgerät MS-B sendet.

Bei dem erfindungsgemäßen Verfahren ist insbesondere vorteilhaft, dass der nachrichtenflußbezogen zwischen Kurzinformation-Dienstzentrum SC und Heimatregister HLR angeordnete Dienstesteuerpunkt SCP von Seiten des Kurzinformation-Dienstzentrums SC wie ein Heimatregister HLR und von Seiten des Heimatregisters HLR wie ein Kurzinformation-Dienstzentrum SC angesprochen wird. Daher sind gegenüber dem heute bekannten Verfahren der Übertragung von schriftlichen Kurzinformationen, bei dem ein Heimatregister (i. allg. über ein oder mehrere Mobil-Vermittlungsstellen) von einem Kurzinformation-Dienstzentrum SC angesprochen wird, lediglich geringe Modifikationen in der Mobil-Vermittlungsstelle notwendig; fast alle gegenüber dem heutigen bekannten Verfahren neuen Aktivitäten können vom Dienstesteuerpunkt SCP ausgeführt werden. Dadurch lässt sich das erfindungsgemäße Verfahren und die erfindungsgemäße Anordnung relativ einfach, schnell und kostengünstig realisieren.

Der Nachrichtenaustausch zwischen dem Heimatregisters HLR, dem Dienstesteuerpunkt SCP, der Mobil-Vermittlungsstelle GMSC, der weiteren Mobil-Vermittlungsstelle MSC und dem Besucherregister VLR wird unter Benutzung eines Mobile Application Part (MAP) genannten Kommunikationsprotokolls durchgeführt.

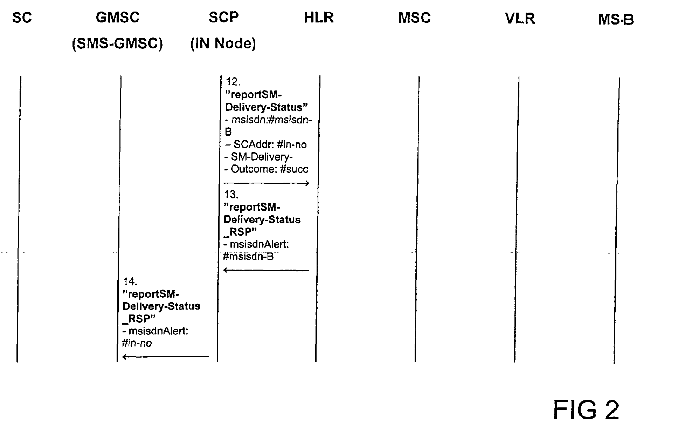

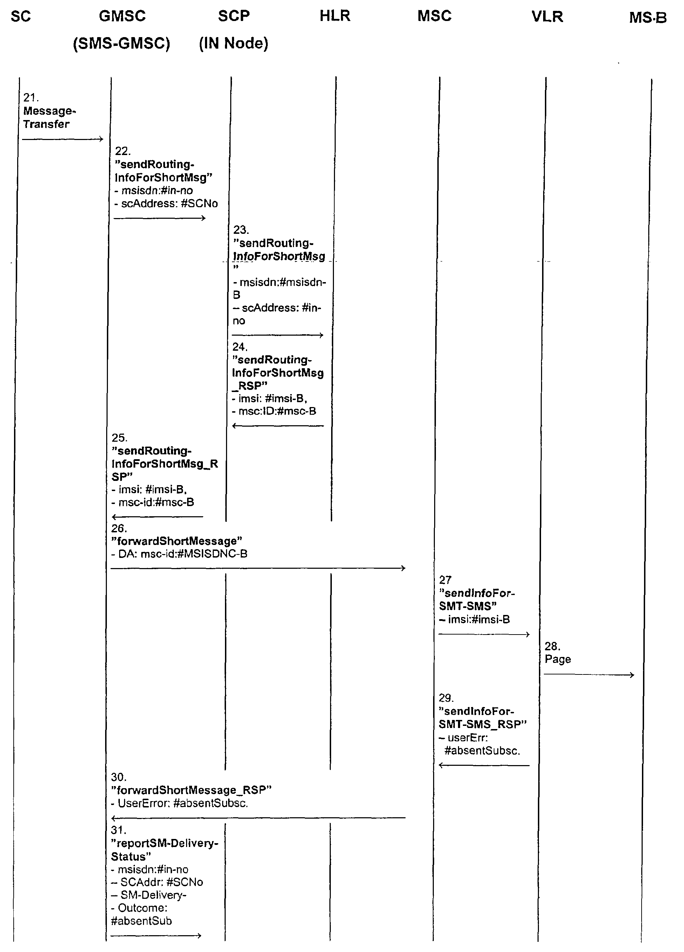

In Figur 2 ist detailliert dargestellt, welche Nachrichten beim Übertragen einer schriftlichen Kurzinformation vom Kurzinformation-Dienstzentrum SC zum Kommunikationsendgerät MS-B ausgetauscht werden. Dazu sind schematisch durch vertikale Linien die bereits in Fig.1 abgebildeten Einheiten
Kurzinformation-Dienstzentrum SC,
Mobil-Vermittlungsstelle GMSC,
Dienstesteuerpunkt SCP,
Heimatregister HLR,
weitere Mobil-Vermittlungsstelle MSC,
Besucherregister VLR und
Kommunikationsendgerät MS-B
dargestellt; die horizontalen Pfeile symbolisieren die zwischen diesen Einheiten gesendeten Nachrichten. Die zeitliche Reihenfolge verläuft von oben nach unten.

Am Anfang des erfindungsgemäßen Verfahrens wird die schriftliche Kurzinformation vom Kurzinformation-Dienstzentrum SC zur Mobil-Vermittlungsstelle GMSC gesendet (Pfeil 1). Die Mobil-Vermittlungsstelle GMSC sendet daraufhin die MAP-Nachricht sendRoutingInfoForShortMsg an den Dienstesteuerpunkt SCP (Pfeil 2), mit der Nachricht sendRoutingInfoForShortMsg wird als Parameter "msisdn" die kommunikationsendgerätefreie Kommunikationsadresse"#in-no" (die IN-Nummer) übertragen. Weiterhin wird als Parameter "scAddress" die Adresse "#SCNo" des Kurzinformation-Dienstzentrum SC übertragen. Der Dienstesteuerpunkt SCP ersetzt in der Nachricht sendRoutingInfoForShortMsg die kommunikationsendgerätefreie Kommunikationsadresse "#in-no" durch die Kommunikationsadresse "#msisdn-B" des Kommunikationsendgerätes MS-B und die Adresse "#SCNo" des Kurzinformation-Dienstzentrum SC durch die kommunikationsendgerätefreie Kommunikationsadresse "#inno". Die Adresse "#SCNo" des Kurzinformation-Dienstzentrums SC wird im Dienstesteuerpunkt SCP zwischengespeichert. Danach sendet der Dienstesteuerpunkt SCP die veränderte Nachricht sendRoutingInfoForShortMsg an das Heimatregister HLR weiter (Pfeil 3). Das Heimatregister HLR ermittelt in bekannter Weise die internationale Mobilfunk-Teilnehmerkennung (IMSI) des Kommunikationsendgerätes MS-B und eine Kennung der wieteren Mobil-Vermittlungsstelle MSC, die zu dem entsprechenden Zeitpunkt für den Standort des Kommunikationsendgerätes MS-B zuständig ist. Diese Informationen werden als Parameter "imsi" und "msc-ID" einer Nachricht sendRoutingInfoForShortMsg_RSP an den Dienstesteuerpunktes SCP zurückgesendet (Pfeil 4), welcher die Nachricht unverändert an die Mobil-Vermittlungsstelle GMSC weiterleitet (Pfeil 5).

Nun besitzt die Mobil-Vermittlungsstelle GMSC alle notwendigen Informationen, um die schriftliche Kurzinformation an das Kommunikationsendgerät MS-B zu senden.
Dies geschieht in bekannter Weise durch Nachrichten , welche durch die Pfeile 6 bis 10 symbolisiert werden. Ein derartiger Nachrichtenfluß ist der Schrift GSM 09.02, Version 5.3.0 der Organisation ETSI (European Telecommunications Standards Institute) vom August 1996, insb. der Seite 562, entnehmbar.

Nach Empfang einer durch den Pfeil 10 symbolisierten Nachricht forwardShortMessage_RSP sendet die Mobilvermittlungsstelle GMSC eine Nachricht reportSM-Delivery-Status an den Dienstesteuerpunkt SCP (Pfeil 11). Diese Nachricht enthält als Parameter "msisdn" die kommunikationsendgerätefreie Kommunikationsadresse (die IN-Nummer, die im GMSC zwischengespeichert wurde). Weiterhin enthält die Nachricht reportSM-Delivery-Status als Parameter "SCAddress" die Adresse des Kurzinformation-Dienstzentrums SC sowie als Parameter "SM-Delivery-Outcome" eine Bestätigung der erfolgreichen Zustellung der schriftlichen Kurzinformation.

Der Dienstesteuerpunkt SCP ersetzt in der Nachricht reportSM-Delivery-Status die IN-Nummer "#in-no" durch die Kommunikationsadresse "#msisdn-B" des Kommunikationsendgerätes MS-B und die Adresse "#SCNo" des Kurzinformation-Dienstzentrums SC durch die kommunikationsendgerätefreie Kommunikationsadresse "#in-no". Danach wird die veränderte Nachricht reportSM-Delivery-Status an das Heimatregister HLR weitergeleitet (Pfeil 12). Das Heimatregister HLR antwortet mit der Nachricht reportSM-Delivery-Status_RSP, welche als Parameter "msisdnAlert" die Kommunikationsadresse des Kommunikationsendgerätes MS-B enthält. Diese Nachricht wird an den Dienstesteuerpunkt SCP gesendet (Pfeil 13). Der Dienstesteuerpunkt SCP ersetzt im Parameter "msisdnAlert" die Kommunikationsadresse des Kommunikationsendgerätes MS-B durch die IN-Nummer und sendet die veränderte Nachricht an die Mobilvermittlungsstelle GMSC zurück (Pfeil 14).

Eine für das Ausführungsbeispiel der Erfindung wesentliche Aktion des Dienstesteuerpunktes SCP besteht also darin, dass dieser in den Nachrichten die Ersetzung der kommunikationsendgerätefreien Kommunikationsadresse "#in-no" durch die Kommunikationsadresse "#msisdn-B" des Kommunikationsendgerätes MS-B vornimmt und dadurch die Übertragung der schriftlichen Kurzinformation an das Kommunikationsendgerät MS-B ermöglicht. Ebenso ersetzt der Dienstesteuerpunkt SCP die Adresse "#SCNo" des Kurzinformation-Servicezentrums SC durch die kommunikationsendgerätefreie Kommunikationsadresse "#in-no" und ermöglicht damit das nachrichtenflußbezogene Einfügen des Dienstesteuerpunktes SCP zwischen das Kurzinformation-Servicezentrums SC und das Heimatregister HLR.

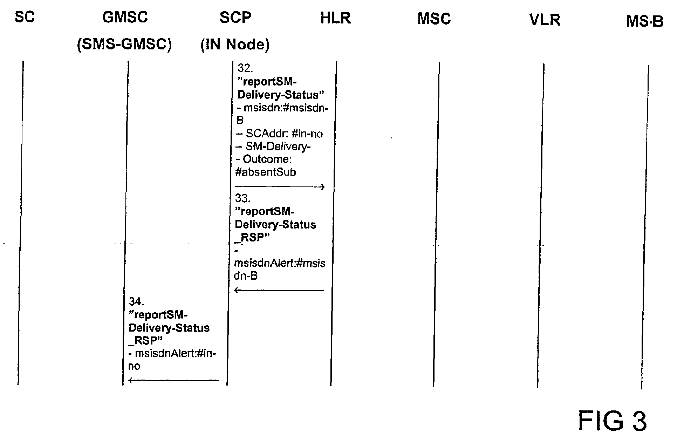

In Fig. 3 ist der Nachrichtenfluß beim erfindungsgemäßen Verfahren dargestellt, wenn die schriftliche Kurznachricht nicht an das als Kurznachricht-Empfänger dienende Kommunikationsendgerät MS-B übertragen werden kann, weil dieses z.B. ausgeschaltet ist, nicht beim Funk-Kommunikationsnetz angemeldet ist oder der Akku des Kommunikationsendgerätes erschöpft ist.

Die durch die Pfeile 21 bis 28 symbolisierten Nachrichten stimmen mit den in Fig. 2 dargestellten Nachrichten überein. Nach dem Absenden der durch den Pfeil 28 symbolisierten Nachricht erhält das Besucherregister VLR jedoch in Abweichung zu Fig. 2 keine Nachricht vom Kommunikationsendgerät MS-B, da die schriftliche Kurznachricht nicht an dieses Kommunikationsendgerät MS-B übertragen werden konnte. Daraufhin sendet das Besucherregister VLR eine Nachricht sendInfoFor-SMT-SMS_RSP (Pfeil 29) an die weitere Mobil-Vermittlungsstelle MSC, diese Nachricht enthält als Parameter "userErr" die Information, dass das Kommunikationsendgerät MS-B nicht erreichbar ist. Die weitere Mobil-Vermittlungsstelle MSC sendet diese Information mittels einer Nachricht forwardShortMessage_RSP (Pfeil 30) an die Mobil-Vermittlungsstelle GMSC weiter. Daraufhin sendet die Mobil-Vermittlungsstelle GMSC eine Nachricht reportSM-Delivery-Status (Pfeil 31) an den Dienstesteuerpunkt SCP; diese Nachricht reportSM-Delivery-Status enthält als Parameter "msisdn" die kommunikationsendgerätefreie Kommunikationsadresse "#in-no" (IN-Nummer, die im GMSC zwischengespeichert wurde ). Weiterhin enthält die Nachricht reportSM-Delivery-Status als Parameter "SCAddress" die Adresse des Kurzinformation-Dienstzentrums SC sowie als Parameter "SM-Delivery-Outcome" eine Mitteilung, dass die schriftliche Kurzinformation nicht an das Kommunikationsendgerät MS-B übertragen werden konnte.

Der Dienstesteuerpunkt SCP ersetzt in der Nachricht reportSM-Delivery-Status die die kommunikationsendgerätefreie Kommunikationsadresse "#in-no" durch die Kommunikationsadresse "#msisdn-B" des Kommunikationsendgerätes MS-B und die Adresse "#SCNo" des Kurzinformation-Dienstzentrums SC durch die kommunikationsendgerätefreie Kommunikationsadresse "#in-no". Danach wird die veränderte Nachricht reportSM-Delivery-Status an das Heimatregister HLR weitergeleitet (Pfeil 32). Das Heimatregister HLR setzt nun ein "MessageWaitingFlag" (in der Figur nicht dargestellt), welches anzeigt, dass die schriftliche Kurznachricht nicht an das Kommunikationsendgerät MS-B übertragen werden konnte. Daraufhin sendet das Heimatregister HLR eine Nachricht reportSM-Delivery-Status_RSP (Pfeil 33) an den Dienstesteuerpunkt SCP. Diese Nachricht reportSM-Delivery-Status_RSP enthält als Parameter "msisdnAlert" die Kommunikationsadresse des Kommunikationsendgerätes MS-B. Der Dienstesteuerpunkt SCP ersetzt beim Parameter "msisdnAlert" die Kommunikationsadresse des Kommunikationsendgerätes MS-B durch die IN-Nummer und sendet die veränderte Nachricht reportSM-Delivery-Status_RSP an die Mobilvermittlungsstelle GMSC zurück (Pfeil 34).

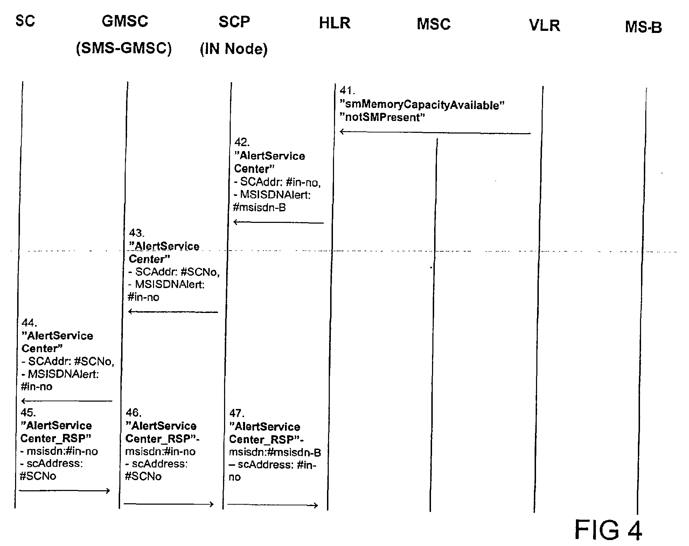

In Figur 4 ist dargestellt, wie das Kurzinformation-Dienstzentrum SC benachrichtigt wird, wenn das Kommunikationsendgerät MS-B wieder bereit zum Empfang von schriftlichen Kurzinformationen ist. Die Ausgangslage zu Beginn des in Fig. 4 dargestellten Ablaufes ist die, dass zuvor vergeblich versucht wurde, eine schriftliche Kurzinformation zu dem Kommunikationsendgerät MS-B zu übertragen. Beispielsweise war das Kommunikationsendgerät MS-B ausgeschaltet, so dass keine Übertragung der schriftlichen Kurzinformationen stattfinden konnte. Daraufhin wurde im Heimatregister HLR ein "MessageWaitingFlag" gesetzt und die IN-Nummer (also die kommunikationsendgerätefreie Kommunikationsadresse "#in-no), an die die zuzustellende schriftliche Kurzinformationen adressiert war) gespeichert.

Sobald das Kommunikationsendgerät MS-B wieder in der Lage ist, eine schriftliche Kurzinformationen zu empfangen (z.B. weil es wieder eingeschaltet ist), wird eine Nachricht smMemoryCapacityAvailable oder eine Nachricht notSMPresent (Pfeil 41) vom Besucherregister VLR an das Heimatregister HLR gesendet. Daraufhin sendet das Heimatregister HLR eine Nachricht AlertServiceCenter (Pfeil 42) an den Dienstesteuerpunkt SCP. Diese Nachricht enthält als Parameter "SCAddress" die IN-Nummer "#in-no", die im Heimatregister HLR gespeichert war. Außerdem enthält die Nachricht als Parameter "MSISDNAlert" die MSISDN des Kommunikationsendgerätes MS-B. Der Dienstesteuerpunkt SCP ersetzt im Parameter "SCAddress" die IN-Nummer durch die zuvor im Dienstesteuerpunkt gespeicherte Adresse des Kurzinformation-Dienstzentrums SC und im Parameter "MSISDNAlert" die MSISDN des Kommunikationsendgerätes MS-B durch die IN-Nummer. Daraufhin wird die veränderte Nachricht AlertServiceCenter an die Mobilvermittlungsstelle GMSC weitergesendet (Pfeil 43). Die Mobilvermittlungsstelle GMSC sendet die veränderte Nachricht AlertServiceCenter daraufhin an das Kurzinformation-Dienstzentrum SC weiter (Pfeil 44). Das Kurzinformation-Dienstzentrum SC sendet daraufhin als Antwort die Nachricht AlertServiceCenter_RSP (Pfeil 45) an die Mobilvermittlungsstelle GMSC. Diese Nachricht AlertServiceCenter_RSP enthält die Adresse "#SCNo" des Kurzinformation-Dienstzentrum SC und als Zielangabe die IN-Nummer "#in-no". Aufgrund der IN-Nummer wird diese Nachricht von der Mobilvermittlungsstelle GMSC an den Dienstesteuerpunkt SCP weitergeleitet (Pfeil 46). Der Dienstesteuerpunkt SCP ersetzt die IN-Nummer "#in-no" durch die Kommunikationsadresse "#msisdn-B" des Kommunikationsendgerätes MS-B und die Adresse "#SCNo" des Kurzinformation-Dienstzentrum SC durch die IN-Nummer "#inno". Daraufhin sendet er die veränderte Nachricht AlertServiceCenter_RSP an das Heimatregister HLR weiter (Pfeil 47). Danach wird die schriftliche Kurznachricht in bekannter Weise zum Kommunikationsendgerät MS-B übertragen.

Das erfindungsgemäße Verfahren und die erfindungsgemäße Anordnung ermöglichen es beispielsweise, eine "Short Message" genannte schriftliche Kurzinformation mit einer IN-Service-Telefonnummer zu adressieren. Dies erweitert die Einsetzbarkeit von Intelligenten Netzen (IN) erheblich, da neben den bisher bekannten, durch Intelligente Netze erbrachten sprachbasierten Diensten durch Nutzung des "Short Message Service"-Systems mittels Intelligenter Netze nun auch datenbasierte Dienste erbracht werden können (z.B. Senden von "Short Messages" zu unterschiedlichen Zielen in Abhängigkeit von Größen wie Wochentag, Uhrzeit oder Standort des Absenders oder flexible Vergebührung von "Short Messages").

## Patentansprüche

1. Verfahren zum Übertragen einer schriftlichen Kurzinformation an ein Kommunikationsendgerät (MS-B) eines Kommunikationsnetzes,
**dadurch gekennzeichnet, dass**
- die schriftliche Kurzinformation an das Kommunikationsendgerät von einem Kurzinformation-Sendegerät mit einer kommunikationsendgerätefreien Kommunikationsadresse adressiert wird,
- aufgrund der kommunikationsendgerätefreien Kommunikationsadresse der schriftlichen Kurzinformation von einem Adressumwandler (SCP) netzseitig diese Adresse durch eine Kommunikationsadresse des Kommunikationsendgerätes (MS-B) ersetzt wird und
- die schriftliche Kurzinformation zu diesem Kommunikationsendgerät (MS-B) übertragen wird.

2. Verfahren nach Anspruch 1,
**dadurch gekennzeichnet, dass**
- als Adressumwandler ein Netzknoten (SCP) eines mit dem Kommunikationsnetz verbundenen oder in dem Kommunikationsnetz enthaltenen Intelligenten Netzes (IN) verwendet wird.

3. Verfahren nach Anspruch 2,
**dadurch gekennzeichnet, dass**
- als Adressumwandler ein Dienstesteuerpunkt (SCP) des Intelligenten Netzes (IN) verwendet wird, der signalflussbezogen zwischen einem Kurzinformation-Dienstzentrum (SC) und einem Heimatregister (HLR) des Kommunikationsnetzes angeordnet ist.

4. Verfahren nach Anspruch 3,
**dadurch gekennzeichnet, dass**
- als Dienstesteuerpunkt (SCP) ein Dienstesteuerpunkt verwendet wird, der
- von Seiten des Kurzinformation-Dienstzentrums (SC) wie das Heimatregister (HLR) angesprochen wird und
- von Seiten des Heimatregisters (HLR) wie das Kurzinformation-Dienstzentrum (SC) angesprochen wird.

5. Anordnung zur Durchführung des Verfahrens nach einem der Ansprüche 1 bis 4, welche
- einen einem Kommunikationsnetz zugeordneten Adressumwandler (SCP) aufweist, der eine kommunikationsendgerätefreie Kommunikationsadresse einer schriftlichen Kurzinformation durch eine Kommunikationsadresse eines Kommunikationsendgerätes (MS-B) ersetzt.

6. Anordnung nach Anspruch 5,
**dadurch gekennzeichnet, dass**
- diese als Adressumwandler einen Netzknoten (SCP) eines mit dem Kommunikationsnetz verbundenen oder in dem Kommunikationsnetz enthaltenen Intelligenten Netzes (IN) aufweist.

7. Anordnung nach Anspruch 6,
**dadurch gekennzeichnet, dass**
- diese als Adressumwandler einen Dienstesteuerpunkt (SCP) des Intelligenten Netzes (IN) aufweist, der signalflussbezogen zwischen einem Kurzinformation-Dienstzentrum (SC) und einem Heimatregister (HLR) des Kommunikationsnetzes angeordnet ist.

8. Anordnung nach Anspruch 7,
**dadurch gekennzeichnet, dass**
- diese als Dienstesteuerpunkt (SCP) einen Dienstesteuerpunkt aufweist, der
- von Seiten des Kurzinformation-Dienstzentrums (SC) wie das Heimatregister (HLR) angesprochen wird und
- von Seiten des Heimatregisters (HLR) wie das Kurzinformation-Dienstzentrum (SC) angesprochen wird.
